# EUROPEAN PATENT APPLICATION

(11) **EP 4 692 624 A1**
(43) Date of publication of application: **11.02.2026**
(21) Application number: 24193016.3
(22) Date of filing: 06.08.2024
(51) Int. Cl.: F16L 37/088, F16L 37/091, F16L 37/092

(54) **CLAMPING RING AND CONNECTOR**

(71) Applicant: Isiflo AS, 2830 Raufoss (NO)
(72) Inventor: SANDMARK, Ragnar, 2830 Raufoss (NO)
(74) Representative: Plougmann Vingtoft a/s

(57) **Abstract**

The present invention relates to a clamping ring (1) for a push-in connector (2) configured to be connected with a pipe during use. The clamping ring has an inner surface (13), an outer surface, and at least one axial slit (12). The inner surface is provided with a plurality of spaced apart circumferential teeth protruding towards the longitudinal axis of the clamping ring. In an end region (18) adjacent to at least one of the at least one slit, for each of the teeth: an area of an axial cross-section of the tooth decreases towards the slit, the tooth has a surface region (19) for which a component of a normal vector of the surface region points towards a direction in which the pipe is inserted into the clamping ring during use, and the axial cross-section is non-symmetrical. The clamping ring prevents unintentional removal of a pipe connected to the connector.

## Description

### FIELD OF THE INVENTION

The present invention relates to a clamping ring and to a connector comprising such a clamping ring. In particular, it relates to a clamping ring which is designed to prevent unintentional removal of a pipe connected to such a connector.

### BACKGROUND OF THE INVENTION

Within many industries, pipes are connected to other pipes or other elements via a push-in connector. This is e.g. the case within the domestic area in relation to the supply of water and/or gas to buildings, such as private houses. In applications where it is critical to ensure that the connection cannot be released again, the locking ring used to secure the connection may be welded to the body of the connector in order to establish a permanent locking. Even though such a welding process is cumbersome and time consuming, it is often used in relation to gas pipes where a leakage would be dangerous. However, it has recently been realized that at least for some connections, it is possible to remove the pipe from the connector by applying a combined rotational and pulling force to the pipe relative to the connector. Even though this is not intended to take place, at least for some applications even the potential risk of this happening can be unacceptable. Hence, an improved clamping ring would be advantageous.

### OBJECT OF THE INVENTION

It is an object of the present invention to provide a clamping ring for a push-in connector which is configured to form a connection with a pipe during use, the pipe being for transfer of liquid and/or gas.

It is another object of the present invention to provide such a clamping ring which is configured to prevent unintentional removal of the pipe from the connector after the connection therebetween has been established.

It is a further object of the present invention to provide an alternative to the prior art.

In particular, it may be seen as an object of the present invention to provide a clamping ring that solves the above-mentioned problems of the prior art.

### SUMMARY OF THE INVENTION

The above-described object and several other objects are intended to be obtained in a first aspect of the invention by providing a clamping ring for a push-in connector, the connector being configured to form a connection with a pipe during use, wherein the clamping ring is annular and comprises:
- an inner surface configured to engage with the pipe during use,
- an outer surface which at least in regions is inclined with respect to a longitudinal axis of the clamping ring, so that an axial cross-section of the clamping ring is wedge-shaped in those regions, and
- at least one axial slit,
wherein:
- the inner surface is provided with a plurality of spaced apart circumferential teeth protruding towards the longitudinal axis of the clamping ring, and
- in an end region adjacent to at least one of the at least one slit, for each of the teeth:
   - an area of an axial cross-section of the tooth decreases towards the slit,
   - the tooth has a surface region for which a component of a normal vector of the surface region points towards a direction in which the pipe is inserted into the clamping ring during use, and
   - the axial cross-section is non-symmetrical.

By such a design of a clamping ring, it is obtained that when the clamping ring is arranged in the connector during use, an application of a combined rotational and pulling force to the pipe relative to the connector will cause the teeth to form grooves in the outer surface of the pipe and result in the pipe being forced into further engagement with the connector. The teeth of the clamping ring will remain engaged with the formed grooves, and for connections which have been established including welding the locking ring together with the body, the effect is that the pipe cannot be removed from the connector. Test made during the development of the present invention have shown that at least for some embodiments of the invention, the engagement of the teeth with the groves formed in the pipe was so strong that only one turn of the pipe was possible, i.e. until grooves had been cut along the whole circumference. Thereafter the pipe could no longer be moved resulting in a safe and permanent connection.

The technical effect of having an outer surface which is wedge-shaped at least in regions is that when the clamping ring is used in a push-in connector, the inclined surfaces will engage with a matching geometry of a locking ring. This will be shown in the figures. Typical angles will be well-known to a person working within this technical field.

The at least one slit allows for using the clamping ring with different dimensions of pipes. It also facilities the insertion of a pipe into a push-in connector, because the dimensions of the inner surface of the clamping ring before compression can be slightly larger than the outer diameter of the pipe.

By the "axial cross-section of the tooth" is meant a cross-section parallel to the longitudinal axis of the clamping ring. This will be more clearly seen in the figures.

In some embodiments of the invention, the shape of the surface region is triangular. An example of such an embodiment will be shown in the figures. However, the shape may also be curved or have other shapes as long as they fall under the scope of protection of claim 1.

The axial cross-sections of the teeth may be identical. This may be advantageous from a manufacturing point of view. It may also provide an evenly distributed and strong engagement with the pipe in response to a combined rotational and pulling force being applied to the pipe relative to the connector.

In some embodiments of the invention, the surface regions are plane and inclined with:
- a first angle relative to an imaginary plane perpendicular to the longitudinal axis of the clamping ring, and
- a second angle relative to an imaginary plane parallel to the longitudinal axis of the clamping ring.

Tests performed during the development of the present invention have shown that such a design provides an efficient and reliable engagement between the clamping ring and a connector in which it is comprised during use.

In embodiments of the invention in which the shape of the surface region is triangular, the smallest angle of the triangular-shaped surface regions may be 10 to 40 degrees, such as 20 to 35 degrees, such as 25 to 30 degrees.

In some of the embodiments of the invention, the longest side of the surface region may be at least 1mm, such as 1-10mm, such as 1-5 mm, such as 1-2mm. The actual size of the surface region will depend on the overall size of the clamping ring.

The clamping ring may comprise one slit extending along a full length of the clamping ring. Such a slit allows the clamping ring to be used for different diameters of the pipe as explained above. In such embodiments of the invention, the clamping ring may have 2-5, such as 3-4, such as 3 circumferential teeth.

As an alternative to one slit extending along a full length of the clamping ring, or in combination therewith, the clamping ring may comprise a plurality of slits which are arranged:
- spaced apart along the circumference, and
- extending from alternating opposite ends of the clamping ring.

For such embodiments, the clamping ring may have 2-5, such as 3-4, such as 3 circumferentially arranged rows of teeth interrupted by slits extending from alternating opposite ends of the clamping ring.

The teeth may have the same shape next to all edges of the at least one slit. Hereby it is obtained that the teeth will work as intended no matter which way the pipe is rotated.

The outer surface of the clamping ring:
- may be inclined with respect to the longitudinal axis of the clamping ring on spaced apart and circumferentially arranged profile regions, and
- may have a smaller, preferably substantially constant, diameter in space regions between the profile regions.

Such an inclined surface in profile regions is configured to engage with a matching inclined surface of a locking ring of a connector. It will result in the clamping ring being pressed against the pipe after the pipe has been inserted into the connector.

The clamping ring may be made from polymer, such as made from POM, PEEK, PPS, PP, or ABS. However, any type of material that allows the clamping ring to work as intended and which is suitable for use in the environment in which the connector is to be used is covered by the scope of protection.

The clamping ring may be manufactured by injection moulding, milling, or 3D-printing.

In a second aspect, the invention relates to a connector configured to form a push-in connection with a pipe, the connector comprising:
- a main body with an inner cavity to be connected with a pipe inserted into the inner cavity via an opening,
- a clamping ring according to the first aspect of the invention, the clamping ring arranged in the inner cavity, and having the outer surface decreasing in diameter in the direction towards the opening in the main body,
- at least one annular seal arranged in the inner cavity to form a sealing connection between the main body and the pipe during use,
- an annular locking ring to be arranged around the pipe during use and form a threaded connection with the main body, the locking ring having an inclined inner surface engaging with the outer surface of the clamping ring so that after insertion of the pipe, the clamping ring is pressed towards the outer surface of the pipe thereby forming a fixed connection between the connector and the pipe.

The first and second aspects of the present invention may be combined so that all the features described for the first aspect, as well as the advantages thereof, also apply to the second aspect of the invention. These and other aspects of the invention will be apparent from and elucidated with reference to the embodiments described hereinafter.

### BRIEF DESCRIPTION OF THE FIGURES

The clamping ring and a connector according to the invention will now be described in more detail with regard to the accompanying figures. The figures show one way of implementing the present invention and is not to be construed as being limiting to other possible embodiments falling within the scope of the attached claim set.
Figure 1 schematically shows a cross-sectional view of a connector according to the second aspect of the invention.
Figures 2A and 2B show two different embodiments of clamping rings having one slit and a plurality of slits, respectively.
Figures 3A and 3B schematically show sectional views of an example of a known clamping ring.
Figures 4A to 4C schematically show sectional views of an embodiment of a clamping ring according to the present invention.
Figure 5 schematically show another embodiment of a clamping ring according to the present invention.

### DETAILED DESCRIPTION OF AN EMBODIMENT

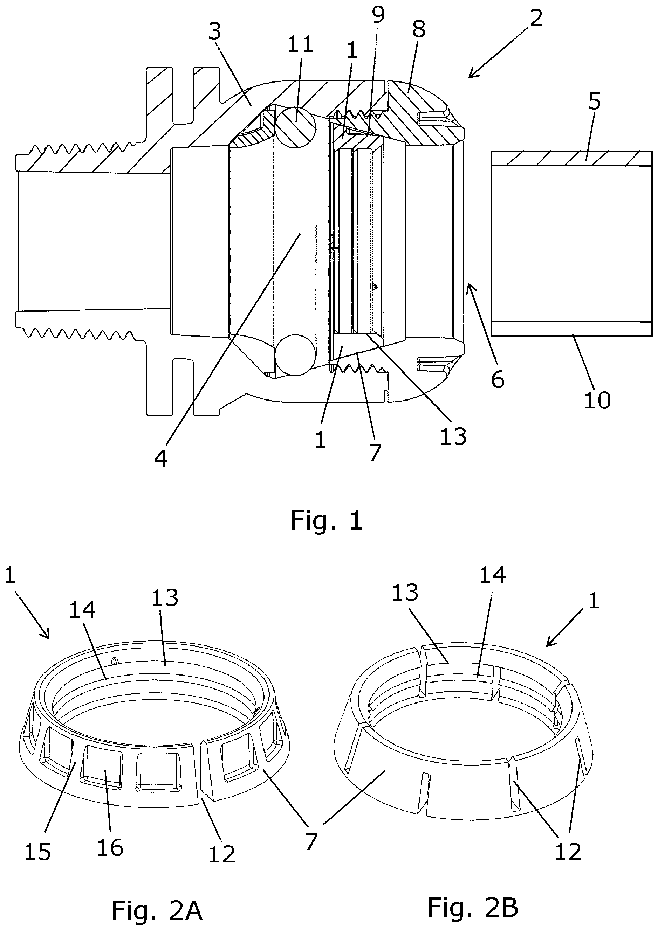

In order to illustrate the clamping ring 1 according to the first aspect of the invention, its intended use in a connector 2 according to the second aspect of the invention will first be described. Figure 1 schematically shows a cross-sectional view of a connector 2 configured to form a push-in connection with a pipe 5 when the pipe 5 is pushed into the connector 2. Therefore, such a connector 2 is typically referred to as a push-in connector. The components have only been hatched in the upper half of the figure. The connector 2 comprises a main body 3 with an inner cavity 4 into which, during installation, a pipe 5 is inserted into the inner cavity via an opening 6. An annular clamping ring 1 is arranged in the inner cavity 4. It has the outer surface 7 decreasing in diameter in the direction towards the opening 6 in the main body 3, i.e. towards the right in the figure. An annular locking ring 8 is arranged around the pipe 1 during use and forms a threaded connection with the main body 3. The locking ring 8 has an inclined inner surface 9 engaging with the outer surface 7 of the clamping ring 1 so that after insertion of the pipe 1, the clamping ring 1 is pressed towards the outer surface 10 of the pipe 5 thereby forming a fixed connection between the connector 2 and the pipe 5. An annular seal 11 is arranged in the inner cavity 4 to form a sealing connection between the main body 3 and the pipe 5 during use. In the illustrated embodiment, the annular seal 11 is an O-ring.

Figures 2A and 2B show two different embodiments of clamping rings 1. The embodiment in figure 2A comprises one axial slit 12 extending along a full length of the clamping ring. The embodiment in figure 2B comprises a plurality of slits 12 which are arranged spaced apart along the circumference and extending from alternating opposite ends of the clamping ring 1. As shown in figures 1, 2A and 2B, the clamping ring has an inner surface 13 configured to engage with the pipe 5 during use. The inner surface 13 is provided with a plurality of spaced apart circumferential teeth 14 protruding towards the longitudinal axis of the clamping ring 1. The clamping ring 1 in figure 2A has three circumferential teeth 14, and the embodiment in figure 2B has three rows of teeth 14 interrupted by the slits 12 extending from alternating opposite ends of the clamping ring 1. The design and technical effect of the teeth 14 will be described in more detail in the following. The outer surface 7 of the clamping ring 1 shown in figures 1 and 2A is in regions 15 inclined with respect to a longitudinal axis of the clamping ring 1 so that an axial cross-section of the clamping ring 1 is wedge-shaped in those regions 15. It has a smaller, preferably substantially constant, diameter in space regions 16 between the profile regions 15. For the embodiment in figure 2B, the outer surface 7 is inclined over the whole circumference.

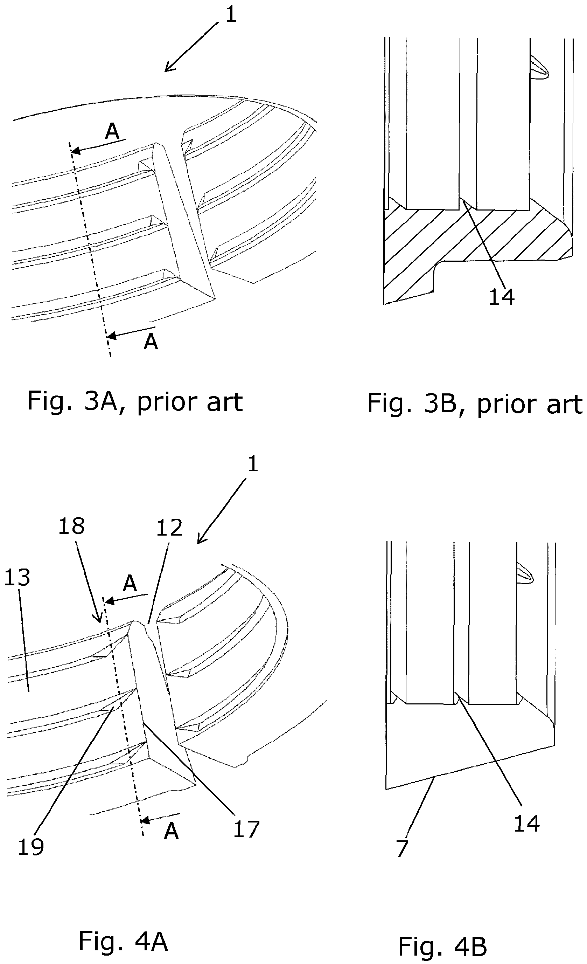

Figures 3A and 3B schematically show sectional views of an example of a known clamping ring 1. The figures show the region around the slit 12 and illustrate a typical design of the teeth 14. Figure 3B shows the cross-section along line A-A in figure 3A. If the pipe 5 is rotated after insertion in the connector 2, the teeth 14 will form grooves in the pipe 5 resulting in a stronger engagement. However, as mentioned above, a possible application of a combined rotational and pulling force to the pipe 5 relative to the connector 2 will make it possible to pull out the pipe 5 without removing the locking ring 8. This causes an unacceptable safety risk at least for some applications. A possible reason for such a removal is that the applied forces result in the clamping ring 1 twisting so that a thread is formed resulting in a possible removal of the pipe 5 along this thread provided that the pipe 5 is configured to be slightly moved out of axial alignment with the connector 2.

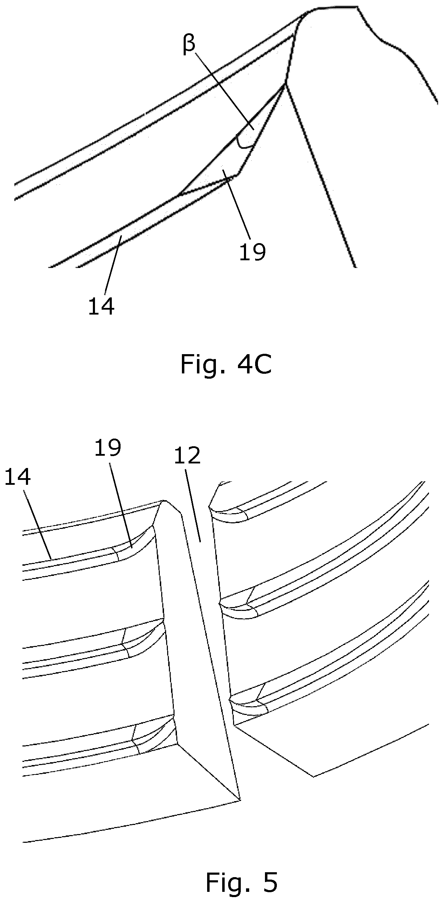

Figure 4A schematically shows the same region as in figure 3A but for a clamping ring 1 according to the present invention. In this embodiment, the clamping ring 1 has three identical teeth 14 with the same axial cross-sections of the teeth 14. Furthermore, in this embodiment the teeth 14 have the same shape next to both edges 17 of the slit 12. In an end region 18 adjacent to the slit 12, for each of the teeth 14: an area of an axial cross-section of the tooth 14 decreases towards the slit 12, the tooth 14 has a surface region 19 for which a component of a normal vector of the surface region 19 points towards a direction in which the pipe 5 is inserted into the clamping ring 2 during use, and the axial cross-section is non-symmetrical. Figure 4B shows the cross-section along line A-A in figure 4A. In this figure, the cross-section has not been hatched in order to better illustrate the details of the teeth 14. At other regions of the teeth 14 than the end regions 18, the cross-sectional shape of the teeth 14 is as in figure 3B. For the clamping ring 2 shown in figures 4A-4C, the shape of the surface region 19 is triangular as shown in figure 4C, and the smallest angle β of the triangular-shaped surface regions 19 is 30 degrees. Another way of describing the clamping ring 2 shown in figures 4A-4C is that the surface regions 19 are plane and inclined with a first angle relative to an imaginary plane perpendicular to the longitudinal axis of the clamping ring, and a second angle relative to an imaginary plane parallel to the longitudinal axis of the clamping ring 2.

Figure 5 schematically shows another embodiment of the invention in which the teeth 14 have a curved shape in the surface region 19. For such an embodiment, the normal vector will point in different directions across the surface region 19. However, the varying normal vectors will all have a component pointing towards a direction in which the pipe 5 is inserted into the clamping ring 1 during use, as claimed in claim 1.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Clamping ring (1) for a push-in connector (2), the connector (2) being configured to form a connection with a pipe (5) during use, wherein the clamping ring (2) is annular and comprises:
- an inner surface (13) configured to engage with the pipe (5) during use,
- an outer surface (7) which at least in regions (15) is inclined with respect to a longitudinal axis of the clamping ring (1), so that an axial cross-section of the clamping ring (1) is wedge-shaped in those regions (15), and
- at least one axial slit (12),
wherein:
- the inner surface (13) is provided with a plurality of spaced apart circumferential teeth (14) protruding towards the longitudinal axis of the clamping ring (1), and
- in an end region (18) adjacent to at least one of the at least one slit (12), for each of the teeth (14):
- an area of an axial cross-section of the tooth (14) decreases towards the slit (12),
- the tooth (14) has a surface region (19) for which a component of a normal vector of the surface region (19) points towards a direction in which the pipe (5) is inserted into the clamping ring (2) during use, and
- the axial cross-section is non-symmetrical.

2. Clamping ring (1) according to claim 1, wherein the shape of the surface region (19) is triangular.

3. Clamping ring (1) according to claim 1 or 2, wherein the axial cross-sections of the teeth (14) are identical.

4. Clamping ring (1) according to any of the preceding claims, wherein the surface regions (19) are plane and inclined with:
- a first angle relative to an imaginary plane perpendicular to the longitudinal axis of the clamping ring (1), and
- a second angle relative to an imaginary plane parallel to the longitudinal axis of the clamping ring (1).

5. Clamping ring (1) according to claim 2 or according to claims 3 or 4 when dependent on claim 2, wherein the smallest angle (β) of the triangular-shaped surface regions (19) is 10 to 40 degrees, such as 20 to 35 degrees, such as 25 to 30 degrees.

6. Clamping ring (1) according to any of the preceding claims, wherein the longest side of the surface region (19) is at least 1mm, such as 1-10mm, such as 1-5mm, such as 1-2mm.

7. Clamping ring (1) according to any of the preceding claims, wherein the clamping ring (1) comprises one slit (12) extending along a full length of the clamping ring (1).

8. Clamping ring (1) according to claim 7, wherein the clamping ring (1) has 2-5, such as 3-4, such as 3 circumferential teeth (14).

9. Clamping ring (1) according to any of claims 1 to 7, wherein the clamping ring (1) comprises a plurality of slits (12) which are arranged:
- spaced apart along the circumference, and
- extending from alternating opposite ends of the clamping ring (1).

10. Clamping ring (1) according to claim 9, wherein the clamping ring (1) has 2-5, such as 3-4, such as 3 circumferentially arranged rows of teeth (14) interrupted by slits (12) extending from alternating opposite ends of the clamping ring (1).

11. Clamping ring (1) according to any of the preceding claims, wherein the teeth (14) have the same shape next to all edges (17) of the at least one slit (12).

12. Clamping ring (1) according to any of the preceding claims, wherein the outer surface (7):
- is inclined with respect to the longitudinal axis of the clamping ring (1) on spaced apart and circumferentially arranged profile regions (15), and
- has a smaller, preferably substantially constant, diameter in space regions (16) between the profile regions (15).

13. Clamping ring (1) according to any of the preceding claims, wherein the clamping ring (1) is made from polymer, such as made from POM, PEEK, PPS, PP, or ABS.

14. Clamping ring (1) according to any of the preceding claims, wherein the clamping ring (1) is manufactured by injection moulding, milling, or 3D-printing.

15. Connector (2) configured to form a push-in connection with a pipe (5), the connector (2) comprising:
- a main body (3) with an inner cavity (4) to be connected with a pipe (5) inserted into the inner cavity (4) via an opening (6),
- a clamping ring (1) according to any of the preceding claims, the clamping ring (1) arranged in the inner cavity (4), and having the outer surface (7) decreasing in diameter in the direction towards the opening (6) in the main body (3),
- at least one annular seal (11) arranged in the inner cavity (4) to form a sealing connection between the main body (3) and the pipe (5) during use,
- an annular locking ring (8) to be arranged around the pipe (5) during use and form a threaded connection with the main body (3), the locking ring (8) having an inclined inner surface (9) engaging with the outer surface (7) of the clamping ring (1) so that after insertion of the pipe (5), the clamping ring (1) is pressed towards the outer surface (10) of the pipe (5) thereby forming a fixed connection between the connector (2) and the pipe (5).
